# DEMANDE DE BREVET EUROPEEN

(11) **EP 1 404 073 A1**
(43) Date de publication de la demande: **31.03.2004**
(21) Numéro de dépôt: 03292248.6
(22) Date de dépôt: 12.09.2003
(51) Int. Cl.: H04L 12/56

(54) **Terminal de télécommunication pour réseau dit "ad-hoc", disposant de moyens pour permettre à l'utilisateur de limiter les ressources utilisées par le réseau**

(30) Priorité: 30.09.2002 FR 0212057
(71) Demandeur: ALCATEL, 75008 Paris (FR)
(72) Inventeur: Marce, Olivier, 91300 Massy (FR); Maillard, Hervé, 91430 Igny (FR)
(74) Mandataire: Chaffraix, Sylvain

(57) **Abrégé**

Terminal de télécommunication possédant des moyens de routage pour recevoir des données destinées à un terminal de télécommunication destinataire, les données comportant des informations sur ce terminal destinataire, pour calculer un prochain terminal en fonction de ces informations, et pour transmettre les données à ce prochain terminal, caractérisé en ce qu'il dispose de surcroît de moyens pour déterminer au moins un seuil limitant l'utilisation des ressources du terminal, par les moyens de routage.

## Description

La présente invention est relative au domaine des réseaux de télécommunication. Elle s'applique plus particulièrement aux réseaux de télécommunication mobile, dans lesquelles les ressources des terminaux mobiles sont utilisées par le réseau pour l'acheminement des données.
Un tel type de réseau est connu sous le nom de réseau ad hoc.

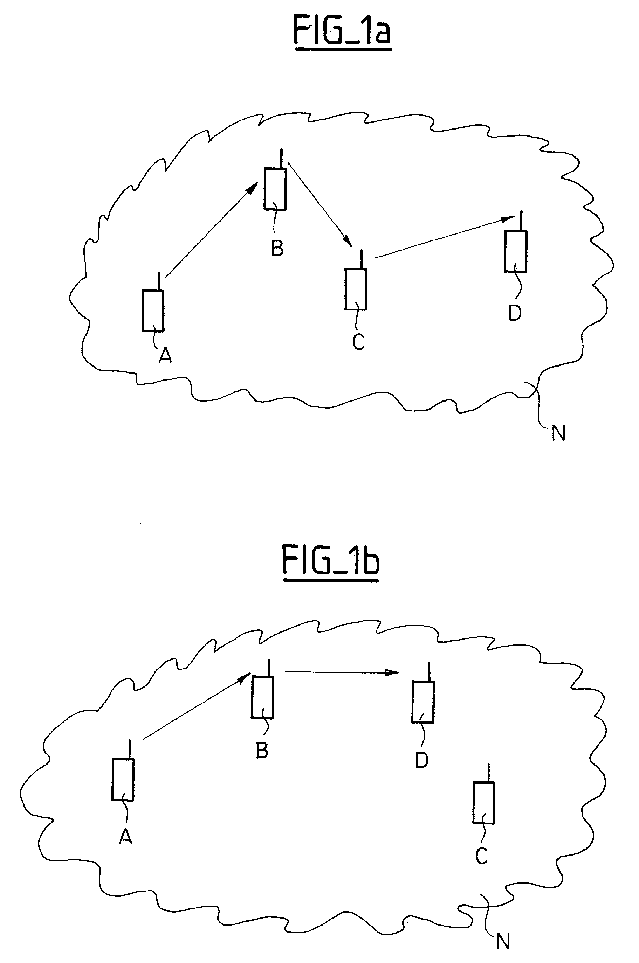

Un réseau ad hoc est représenté sur les figures 1 a et 1 b. Le réseau N comporte un ensemble de terminaux A, B, C, D. Il s'agit typiquement, mais non exclusivement, de terminaux mobiles possédant des capacités de transmission par ondes radio. Ces terminaux possèdent, en outre, une fonction d'acheminement des données (relais) : dans l'exemple illustré par la figure 1 a, les données transmises par le terminal A vers le terminal B pourront être acheminées par les terminaux B et C, si la technologie ne permet pas une transmission directe entre les terminaux A et D (en raison d'une distance excessive, par exemple).
Cela signifie donc que puisque ces terminaux sont mobiles, les règles d'acheminement doivent constamment s'adapter aux positions relatives. Ainsi, sur la figure 1 b, le terminal D s'est rapproché du terminal B, tandis que le terminal C s'en est éloigné. Le terminal B doit prendre en compte cet état de fait et transmettre les données directement au terminal D.

On comprend donc que l'acheminement des données par relais successifs consomme des ressources de chaque terminal mobile impliqué dans l'acheminement. Ces ressources sont de différents types ; il s'agit notamment des ressources mémoires et des ressources en énergie. En effet, chaque message relayé engendre la consommation de l'énergie du terminal relayant le message, et la mémorisation d'information de route vers un autre terminal nécessite l'utilisation d'une partie de la mémoire du terminal relais.

Du point de vue de l'utilisateur d'un terminal, ces utilisations de ressources peuvent engendrer différents inconvénients :
- Lorsqu'il utilise son terminal de télécommunication, l'acheminement de données d'autres utilisateurs et la gestion des routes entre les terminaux peuvent engendrer une diminution des performances de son terminal. Par exemple, l'accès à certaines fonctionnalités peut être ralenti, ou même empêché.
- Qu'il l'utilise ou non, l'acheminement des données et la gestion des routes engendrent une surconsommation de ses ressources en mémoire ou en énergie, c'est-à-dire une diminution de l'autonomie. Ainsi, même sans utiliser son terminal de télécommunication, l'utilisateur peut être surpris par l'impossibilité d'utiliser tout ou partie de ses fonctions pour cause de déchargement de ses capacités énergétiques (batteries) ou d'encombrement de la mémoire (mémoire saturée).

Une solution possible pour l'utilisateur est d'éteindre son terminal de télécommunication lorsqu'il ne l'utilise pas, ou lorsqu'il se trouve dans l'incapacité de le recharger facilement en cas de déchargement (en déplacement, par exemple).

Toutefois, du point de vue du réseau, une telle solution n'est pas acceptable puisqu'elle le prive des capacités d'acheminement du terminal de télécommunication éteint. Si un nombre suffisamment important d'utilisateurs procède de même, le réseau risque de ne plus être fonctionnel, ou en tout cas, de voir ses performances dégradées.
De plus, même du point de vue de l'utilisateur, une telle solution souffre de l'inconvénient majeur de ne plus lui permettre d'être appelé.

Une autre solution existe, qui consiste à rendre le choix de route de transmission dépendant des ressources restantes dans le terminal de communication (charge des batteries en général). Un tel dispositif est réalisé par le protocole de détermination des routes. Une telle solution est par exemple décrite dans l'article « *Power-aware Routing in Mobile Ad Hoc Networks* » de Suresh Singh et Mike Woo, présenté lors de la conférence *« Mobile Computing and Networking »* en 1998.
Cette solution ne résout cependant pas le problème du point de vue de l'utilisateur. Ce dispositif permet au réseau d'optimiser son fonctionnement en fonction des ressources dans les terminaux disponibles, mais il ne permet pas à l'utilisateur d'indiquer de quelle manière il souhaite que ses ressources soient utilisées.

Une autre solution a été présentée dans la demande de brevet WO 03021817. Elle consiste à permettre à l'utilisateur d'un terminal de signaler son terminal comme non disponible pour le routage. Cette solution est toutefois binaire. Elle souffre donc d'une partie des inconvénients de la solution consistant à éteindre son terminal, en engendrant des possibles manques de ressources de routage pour le réseau. Elle est donc clairement insuffisante.

Le but de la présente invention est donc de palier les inconvénients engendrés par l'utilisation des ressources du terminal de l'utilisateur par les services du réseau de télécommunication sans contrôle de l'utilisateur, sans pour autant mettre en question le fonctionnement de ce réseau.

L'invention a pour premier objet un terminal de télécommunication possédant des moyens de routage pour recevoir des données destinées à un terminal de télécommunication destinataire, ces données comportant des informations sur le terminal de télécommunication destinataire, pour calculer un prochain terminal de télécommunication en fonction de ces informations, et pour transmettre les données à ce prochain terminal de télécommunication. Ce terminal de télécommunication se caractérise en ce qu'il dispose de surcroît de moyens pour déterminer au moins un seuil limitant l'utilisation des ressources du terminal de télécommunication, par les moyens de routage.
Selon un mode de réalisation préférentiel, le fonctionnement des moyens de routage dépend de la comparaison des ressources au ou aux seuil(s).
Les ressources peuvent être des ressources d'énergie, une quantité de mémoire etc.
Selon un mode de réalisation, le terminal de télécommunication dispose de surcroît de moyens pour déterminer qu'un message est un message d'urgence, et la limitation des ressources n'est pas effective pour lesdits messages d'urgence.
Selon une mise en oeuvre de l'invention, la valeur du seuil est transmise à un centre de facturation, le centre de facturation mettant en oeuvre une politique faisant dépendre la facturation de la valeur de ce seuil.

Il peut aussi être prévu que les moyens de routage ne sont pas disponibles pour les messages originaires du terminal de télécommunication, si le compte de l'utilisateur de ce terminal de télécommunication auprès du centre de facturation est inférieur à un second seuil, préférentiellement égal à 0.
Selon un mode de réalisation, le moyen de routage peut aussi être prévu pour déterminer le prochain terminal de télécommunication, en fonction de la comparaison du seuil et des ressources pour les terminaux de télécommunication considérés.

L'invention a pour second objet un centre de facturation pour établir une facture associée aux utilisateurs d'un réseau de télécommunication, en fonction d'une politique de facturation et de l'usage de ce réseau de télécommunication par les utilisateurs. Ce centre de facturation se caractérise en ce que la politique de facturation consiste :
- à porter au crédit d'un utilisateur le tarif associé à la valeur de seuil atteint lors de la transmission de message pour d'autres utilisateurs, et,
- à porter au débit de cet utilisateur, le tarif associé à la valeur de seuil atteint lors de la transmission d'un message de ses propres communications par les autres utilisateurs.
   Selon un mode de réalisation, le centre de facturation dispose de moyens pour associer un tarif à une valeur de seuil.
   Il peut être prévu que l'utilisateur peut lui-même fixer le tarif associé à une valeur de seuil.

L'invention sera plus claire dans la description d'une mise en oeuvre qui va suivre en liaison avec les figures jointes.

Les figures 1a et 1b, déjà commentées, représentent un réseau ad hoc et son évolution dans le temps.
La figure 2a et 2b illustrent deux modes de réalisation d'un terminal de télécommunication selon l'invention.

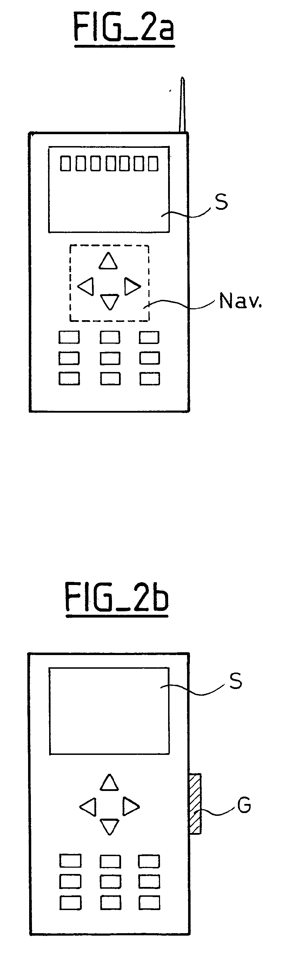

Les figures 2a et 2b représentent deux modes de réalisation possible pour l'interface homme-machine (IHM) d'un terminal de télécommunication de type terminal mobile.
La figure 2a présente une réalisation classique dans laquelle la détermination du seuil peut être réalisée par l'intermédiaire des menus de configuration du terminal mobile. L'utilisateur peut alors accéder à ce réglage en naviguant de façon classique en soi, au travers des menus de configuration. Il peut régler ce seuil par l'utilisation des touches de navigation Nav de son terminal. Sur la figure 2a, ce réglage a été représenté sous la forme d'une barre dont le nombre de cases grisées représente le niveau du seuil, mais il est bien évidemment clair que toute représentation graphique est possible.

La figure 2b représente une autre possibilité, dans laquelle le réglage du seuil est accessible par l'utilisateur, directement, sans passer par l'intermédiaire du menu de configuration, via un moyen de commande G. Ce moyen de commande G peut être un bouton glissant, permettant la sélection du seuil entre deux valeurs butoirs extrêmes.

Quelque soit le mode de réalisation, le terminal mobile permet donc la détermination d'un ou de plusieurs seuils par l'utilisateur. Un seuil peut être sélectionné de façon continue, entre deux valeurs extrêmes, ou bien il peut être sélectionné parmi un ensemble de valeurs prédéfinies. Par exemple, trois valeurs peuvent être ainsi prédéfinies : 25%, 50% et 75%

Les valeurs extrêmes peuvent prévoir la réservation de ressources minimales pour les moyens de routage du terminal mobile. Par exemple, on peut prévoir que l'utilisateur ne pourra préciser un seuil de réservation de ses ressources supérieur à 90 ou 95% des ressources, afin d'assurer une qualité de service minimale au sein du réseau ad hoc disponibles (qu'il s'agisse de ressources en énergie, en mémoire ou de toute autre ressource).
inversement, il peut être prévu que ce seuil ne puisse aller en deçà de 5 ou 10% afin que la transmission des données (relais) ne bloque pas les autres fonctions du terminal mobile et que l'utilisateur puisse bénéficier d'une qualité de service minimale, autant qu'il est possible.
Concrètement, cela peut aussi signifier que par exemple les 5 derniers pour cents des ressources en énergie sont réservées à l'utilisateur du terminal mobile.

Selon une mise en oeuvre de l'invention, le fonctionnement desdits moyens de routage dépend de la comparaison des ressources au ou aux seuil(s).

Notamment, si un seul seuil a été défini, les moyens de routage peuvent n'être fonctionnels que si les ressources sont supérieures à ce seuil, déterminé par l'utilisateur.

Il peut s'agir de ressources en énergie. Auquel cas, les moyens de routage ne sont fonctionnels que si le niveau des ressources en énergie (par exemple, le niveau de charge de la batterie contenue dans le terminal mobile) est supérieur à ce seuil.

Il peut aussi s'agir de ressource de mémoire. Dans ce cas, les moyens de routage ne sont fonctionnels que si la quantité de mémoire encore disponible est supérieure à ce seuil.

Dans le cas où les moyens de routage ne sont pas fonctionnels, le terminal peut être amené :
- soit à ne plus répondre à aucune sollicitation du réseau, sauf celles qui correspondent à l'établissement d'une communication dont il est destinataire,
- ou bien à signaler au réseau qu'il se trouve dans un mode de mise en veille, et qu'il ne peut plus retransmettre de communication. Selon le protocole mis en oeuvre dans le réseau, le terminal peut avoir la possibilité d'indiquer qu'il n'est susceptible que de recevoir des communications qui lui sont destinées.

Selon un mode de réalisation, dans le cas où les moyens de routage ne sont pas fonctionnels, le terminal transmet quand même les communications d'urgence. Ces communications d'urgence peuvent être identifiées au moyen d'un marquage des paquets la composant.

Cet état est différent de celui qui est déjà mis en oeuvre dans les terminaux de communication radio (mode de sauvegarde d'énergie, "energy saving mode" en anglais) en ce qu'il ne concerne que l'interruption momentanée de la fonction de relais des communications, et non l'ensemble des communications du terminal.
A titre d'illustration, l'invention peut être mise en oeuvre dans un terminal utilisant le protocole de routage Ad-Hoc DSR (Dynamic Source Routing) de la manière suivante, sans que cela ne soit restrictif à l'invention.

Lorsque les ressources du terminal passent en dessous du seuil défini par l'utilisateur, les modifications du fonctionnement du protocole DSR suivantes s'appliquent :
- Modification 1 : Le terminal supprime silencieusement les messages du type "Route Request" et "Route Response" afin de ne plus apparaître comme un relais aux yeux des autres terminaux. Lorsque le terminal reçoit un message du type "Route Request" qui lui est destiné, ou éventuellement qui correspond à une communication d'urgence), il conserve un comportement normal. Ainsi le noeud reste joignable et peut continuer à fournir le support nécessaire aux communications d'urgence.
- Modification 2 : Lorsque le terminal est sollicité en temps que relais pour retransmettre un paquet, il ne le transmet pas et envoie en retour un message du type "*Route Error"* afin que soient supprimés des tables de routage des autres terminaux les chemins dans lesquels le terminal apparaît en temps que relais. Comme mentionné précédemment, exception peut être faite pour les messages correspondant à des communications d'urgence.

Selon une mise en oeuvre de l'invention, dans le cas ou plusieurs seuils sont définis par l'utilisateur, le terminal peut par exemple appliquer la modification numéro 1 lorsqu'un premier seuil est atteint, et les modifications numéros 1 et 2 lorsqu'un deuxième seuil est atteint. Ainsi, le terminal réduit ses communications avec le réseau et donc sa consommation de ressources de manière progressive.

Selon une mise en oeuvre de l'invention, on associe une politique de tarification à la détermination du seuil par l'utilisateur.
Lorsque ses ressources sont utilisées par le réseau, le terminal compare la quantité de ressource disponible du terminal avec les seuils définis par l'utilisateur. L'intervalle de seuils correspondant est associé à la communication. Cette association est ensuite transmise à un centre de facturation, que se soit en-ligne (en même temps que la communication) ou bien hors-ligne (le terminal stocke les informations et les transmet de manière périodique, ou sur demande du centre de facturation).

Le centre de facturation selon l'invention a pour objet d'établir une facture associée aux utilisateurs du réseau de télécommunication. La facture dépend d'une part de l'usage du réseau par les utilisateurs, et d'autre part d'une politique de facturation.
Selon l'invention, le centre de facturation détermine la valeur de seuil atteint, et réalise ensuite la consolidation des associations, créditant les utilisateurs dont les ressources de leurs terminaux ont été utilisées pour des communications d'autres utilisateurs, et débitant les utilisateurs qui ont utilisé les ressources des terminaux des autres utilisateurs.
Le centre de facturation peut disposer, pour cela, de moyens d'association (par exemple, une simple table de correspondance) de tarifs à des valeurs de seuil.
Selon un mode de réalisation de l'invention, les tarifs peuvent être fixés par l'utilisateur lui-même.

Selon une mise en oeuvre de l'invention, les moyens de routages peuvent ne pas être disponibles pour les messages originaires du terminal de télécommunication, si le compte de l'utilisateur du terminal de télécommunication auprès du centre de facturation est inférieur à un second seuil. Ce second seuil est préférentiellement égal à 0. Autrement dit, si le compte de l'utilisateur est négatif ou inférieur au second seuil, il ne pourra plus utiliser son terminal pour envoyer de message ; les moyens de routage ne seront disponibles que pour la fonction de relais.
Le second seuil peut être différent de 0, soit positif, soit négatif (c'est-à-dire qu'un « découvert » est alors autorisé par l'opérateur du réseau de télécommunication).
Comme mentionné précédemment, il peut être fait une exception pour le cas des communications d'urgence qui, elles, peuvent être toujours routées.

Dans ces mises en oeuvre, une information sur le solde de l'utilisateur est transmise en même temps que le demande d'utilisation des ressources.
Ainsi, si l'utilisateur choisit de conserver les ressources pour son usage personnel, il pourra être surfacturé. Au contraire, s'il décide de laisser les ressources à l'usage du réseau, il pourra bénéficier d'une tarification réduite, voire négative, lui procurant un crédit.
Ainsi, l'utilisateur a à décider d'un compromis entre les ressources de son terminal de télécommunication qu'il consent à mettre à la disposition de la communauté et le tarif qu'il désire payer. Par ce compromis, l'invention propose un modèle commercial susceptible de permettre le déploiement de réseaux de télécommunication de type ad hoc.

Selon une mise en oeuvre de l'invention, les protocoles de routages peuvent tenir compte des seuils fixés par les utilisateurs, et donc de la valeur qu'ils associent à leurs ressources, pour choisir le chemin à suivre. Le choix du prochain terminal de télécommunication (c'est-à-dire celui vers lequel les données seront finalement transmises), parmi le voisinage, se fait alors en fonction de la comparaison de ce seuil et desdites ressources.

Cette façon de faire permet de minimiser le nombre de terminaux de télécommunication ayant atteint le seuil et donc le nombre de terminaux de télécommunication dont les moyens de routage ne sont plus fonctionnels.
Dans le cas où une politique de facturation dépendante du seuil a été mise en oeuvre, elle favorise statistiquement les terminaux ayant un seuil réduit, donc pour lesquels la facturation est la plus élevée.

## Revendications

1. Terminal de télécommunication possédant des moyens de routage pour recevoir des données destinées à un terminal de télécommunication destinataire, lesdites données comportant des informations sur ledit terminal de télécommunication destinataire, pour calculer un prochain terminal de télécommunication en fonction desdites informations, et pour transmettre lesdites données audit prochain terminal de télécommunication, **caractérisé en ce qu'**il dispose de surcroît de moyens pour déterminer au moins un seuil limitant l'utilisation des ressources dudit terminal de télécommunication, par lesdits moyens de routage.

2. Terminal de télécommunication selon la revendication 1, dans lequel le fonctionnement desdits moyens de routage dépend de la comparaison desdites ressources audit au moins un seuil.

3. Terminal de télécommunication selon l'une des revendications précédentes, dans lequel lesdites ressources sont des ressources d'énergie.

4. Terminal de télécommunication selon l'une des revendications 1 à 3, dans lequel lesdites ressources sont une quantité de mémoire.

5. Terminal de télécommunication selon l'une des revendications précédentes, disposant de surcroît de moyens pour déterminer qu'un message est un message d'urgence et dans lequel la limitation des ressources n'est pas effective pour lesdits messages d'urgence.

6. Terminal de télécommunication selon l'une des revendications précédentes, dans lequel la valeur du seuil est transmise à un centre de facturation, ledit centre de facturation mettant en oeuvre une politique faisant dépendre la facturation de la valeur dudit seuil.

7. Terminal de télécommunication selon la revendication précédente, dans lequel lesdits moyens de routage ne sont pas disponibles pour les messages originaires dudit terminal de télécommunication, si le compte de l'utilisateur dudit terminal de télécommunication auprès dudit centre de facturation est inférieur à un second seuil, préférentiellement égal à 0.

8. Terminal de télécommunication selon l'une des revendications précédentes, dans lequel ledit moyen de routage est prévu pour déterminer ledit prochain terminal de télécommunication, en fonction de la comparaison dudit seuil et desdites ressources pour les terminaux de télécommunication considérés.

9. Centre de facturation pour établir une facture associée aux utilisateurs d'un réseau de télécommunication, en fonction d'une politique de facturation et de l'usage dudit réseau de télécommunication par lesdits utilisateurs, **caractérisé en ce que** ladite politique de facturation consiste
• à porter au crédit d'un utilisateur le tarif associé à la valeur de seuil atteint lors de la transmission de message pour d'autres utilisateurs, et,
• à porter au débit dudit utilisateur la valeur de seuil atteint lors de la transmission d'un message de ses propres communications par les autres utilisateurs.

10. Centre de facturation selon la revendication précédente, disposant de moyens pour associer un tarif à une valeur de seuil.

11. Centre de facturation selon la revendication précédente, dans lesquels l'utilisateur peut lui-même fixer le tarif associé à une valeur de seuil.
